# EUROPEAN PATENT SPECIFICATION

(11) **EP 4 630 301 B1**
(45) Date of publication and mention of the grant of the patent: **02.12.2026**
(21) Application number: 23844550.6
(22) Date of filing: 06.12.2023
(51) Int. Cl.: B60T 7/12, B60T 8/00, B60T 13/74

(54) **BRAKE ASSIST SYSTEM FOR A VEHICLE**
BREMSASSISTENZSYSTEM FÜR EIN FAHRZEUG
SYSTEME D'ASSISTANCE AU FREINAGE POUR VEHICULE

(30) Priority: 08.12.2022 PL 44308122
(43) Date of publication of application: 15.10.2025
(73) Proprietor: Ploszkiewicz, Adam, 18-400 Lomza (PL)
(72) Inventor: Ploszkiewicz, Adam, 18-400 Lomza (PL)
(74) Representative: Patpol Kancelaria Patentowa Sp. z o.o.
(86) International application number: PCT/PL2023/050103
(87) International publication number: WO 2024/123199

(56) References cited:
- JP-A- H11 255 088
- US-A1- 2017 291 585

## Description

The object of the invention is a brake assist system for a vehicle provided with a brake actuated by a brake pedal, the vehicle having a vehicle body with a suspension system connected to the vehicle body, at least for the front axle, the suspension system comprising semi-axles with wheels mounted thereon, steering knuckles and shock absorbers, and the steering knuckles couple the semi-axles with the shock absorbers.

Motor vehicles, predominantly, have a hydraulic brake system. Solutions described heretofore, that aim to enhance such a brake system, focus on facilitating the use of the brake system by the driver by means of reduction of the force the driver has to apply to activate the brake. Such braking force boosters, apart from the ergonomic aspect, also enhance efficiency of such a brake system. Examples are known of pneumatic, mechanic and electro-mechanic braking force boosters. They enhance effectiveness of the brake system, but they focus on increasing the volume of the brake fluid introduced into the brake cylinders. Increase in the volume of the brake fluid causes increase in the force that presses the brake lining against the brake discs and this in turn causes enhancement of the braking effect of a given vehicle.

A distinct and important group of solutions are those to enhance reliability of a standard brake system or considerably lengthen its service life.

There are also brake assisting systems which rely on preventing wheel locking to avoid skid and this improves steerability of the vehicle during braking.

From JPH11255088A a system is known that detects inter-vehicle distance and increases the brake pressure to the required pressure so that the inter-vehicle distance remains safe. This system comprises several sensors (position sensor for a brake pedal, a velocity sensor, suspension deflection sensor and a sensor for detecting the inter-vehicle distance) and a system controller with which all the sensors are operatively associated. The system comprises quite complex actuating device that is connected with a brake system of the vehicle. The system is activated in the case when it detects lack of continuity in inter-vehicle distance signals coming from the sensor for detecting the inter-vehicle distance, the lack of continuity being caused by braking and therefore suspension is deflected in the amount that exceeds the capability of the sensor to detect the vehicle distance (vehicle pitching). This invention solves the problem with false readings from the distance sensor and allows for automatic emergency braking.

The present invention provides an additional, over the mentioned prior art, possibility to enhance effectiveness of vehicle braking.

The invention regards a brake assist system for a vehicle provided with a brake actuated by a brake pedal, the vehicle comprising a vehicle body and a suspension system connected to the vehicle body, at least for a front axle, the suspension system comprising semi-axes with wheels mounted thereon, steering knuckles and shock absorbers, and the steering knuckles couple the semi-axles with the shock absorbers. The invention is characterized in that it comprises a brake pedal position sensor, a velocity sensor, a suspension deflection sensor, a system controller, and an actuator secured with its one end to a non-movable portion of the vehicle body and with its other end free, so that, in the operational position, the free end presses against the movable portion of the suspension system, wherein the brake pedal position sensor, the velocity sensor, the deflection sensor and the actuator are operationally connected to the controller.

Preferably, the velocity sensor is positioned next to the wheel.

Also preferably, the deflection sensor is positioned between the non-movable portion of the vehicle body and a movable portion of the suspension system of the vehicle front axle, and more preferably - it is secured between the floor panel of the vehicle and the steering knuckle.

Conveniently, the actuator is a pneumatic actuator and it is provided with a control valve and, additionally, the system comprises a compressor.

Also conveniently, the actuator is a hydraulic actuator and it is provided with a control valve and, additionally, the system comprises a pump.

Also conveniently, the actuator is an electric actuator.

In summary, the invention provides a system that causes increase in the force with which the vehicle wheels are pressed against the ground at the time of abrupt braking. The increase of the pressure of the wheels against the ground reduces skid of the vehicle wheels and this directly induces shortening of the braking distance. The most important elements of the systems are: a velocity sensor, a suspension deflection sensor, a system controller and an actuator that is responsible for pressing the front wheels against the ground. The velocity sensor measures the instantaneous vehicle velocity and transmits a signal to the controller. The suspension deflection sensor measures deflection of the suspension at a specific moment and transmits a signal to the controller. An additional sensor measures the position of the brake pedal. The controller controls operation of the whole system and it does not have to be positioned directly next to the vehicle suspension system. The pneumatic, hydraulic or electric actuator is secured to a non-movable element of the construction of the vehicle and during operation of the system it interacts with a movable part of the suspension. During regular driving, the actuator has no contact with the movable portion of the suspension.

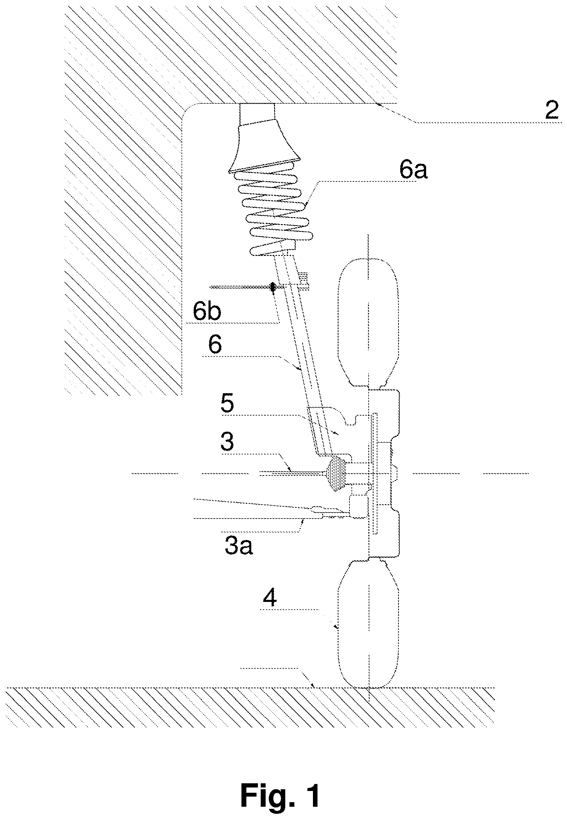

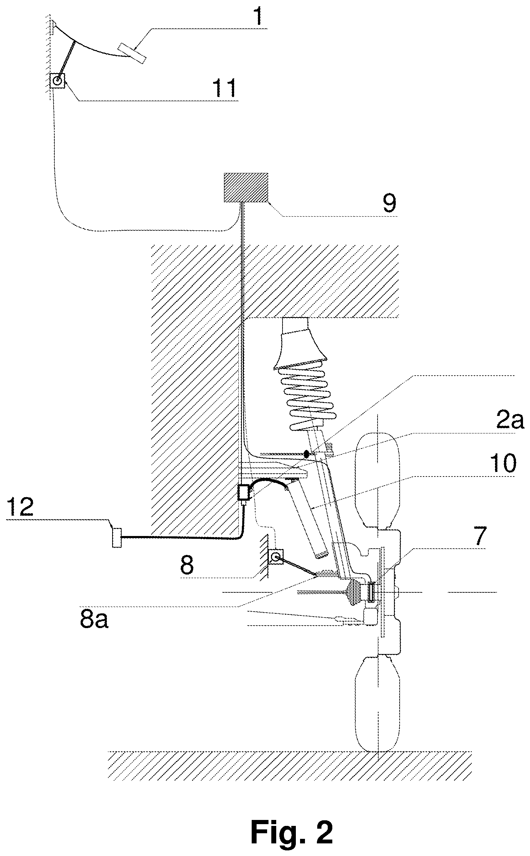

The object of the invention is shown in embodiments in the drawings where fig. 1 shows schematically a standard solution of the prior art, and fig. 2 shows a system according to the invention.

Fig. 1 shows schematically a suspension system of one of vehicle axles of the prior art. Conventionally, the vehicle is provided with a brake actuated by a brake pedal 1 (not shown in fig. 1), has a vehicle body 2 and a suspension system of the axles connected to the vehicle body. The suspension system comprises semi-axes 3 with suspension rocker arms 3a, with wheels mounted thereon 4, steering knuckles 5 and shock absorbers 6 with springs 6a, with a steering rod 6b, the steering knuckles coupling the semi-axles 3 with the shock absorbers 6.

Fig. 2 shows a brake assist system for a vehicle according to the invention which comprises the elements of a standard suspension system of the prior art, as shown in fig. 1. Additionally, there is a position sensor 11 of the brake pedal 1, a vehicle velocity sensor 7, a suspension deflection sensor 8, a system controller 9, and an actuator 10, the latter being secured with one its end to a non-movable portion of the vehicle body 2 which in an embodiment is for this purpose provided with an upper bracket 2a, and with its other end free so that in the operational position the free end presses against the movable portion of the suspension system, wherein the position sensor 11 of the brake pedal 1, the velocity sensor 7, the deflection sensor 8, and the actuator 10 are operatively connected to the controller 9. It is conceivable that the actuator 10 may be mounted to the vehicle body 2 in any other suitable manner.

In the preferable embodiment shown in fig. 2, the velocity sensor 7 is positioned next to the wheel 4, but it will be clear for a person skilled in the art that it may be positioned as well in other convenient sites in/on the vehicle. The velocity sensor 7 may be both a vehicle velocity sensor and a sensor of the rotational velocity of the wheel 4.

As shown in fig. 2, the deflection sensor 8 is positioned between the non-movable portion of the vehicle body 2 and a movable portion of the suspension system of the vehicle front axle. In a preferable embodiment, it may be secured between the floor panel of the vehicle and the steering knuckle 5. Fig. shows that it is secured via a bottom bracket 8a, but this may be also implemented in another convenient manner.

The actuator 10 may be an electric, hydraulic or pneumatic actuator. For an electric actuator 10, it is clear that it has to be connected to a suitable power supply which may be the vehicle electric system. The pneumatic or hydraulic actuators 10 have to possess a control valve (not shown) as well as a compressor or pump 12, respectively. Fig. 2 shows a variant with a hydraulic actuator 10 and a pump 12.

The invention operates as follows:
The instant of initiation of abrupt braking is determined by the position sensor 11 of the brake pedal 1. If when driving the driver starts braking abruptly, the front suspension will deflect and this will be detected by the suspension deflection sensor 8, while the velocity sensor 7 will detect a change in the vehicle velocity or in the rotational velocity of the wheel. Signals from the sensors will be transmitted to the controller 9. It may be assumed that the braking distance of a vehicle at 100 km/h on a dry asphalted road is about 60 meters, and it takes 2-2,5 seconds to stop the vehicle. If a vehicle at 100 km/h starts braking, then the front suspension deflects, e.g., by about 15 cm. The system controller 9, with these data, is programmed so that it controls the actuator 10 by means of the control valve and raises the vehicle body 2 by 15 cm within 2 seconds. The force applied by the actuator 10 to the suspension is similar as the force which will be additionally transferred to the vehicle wheels 4 to improve their adhesion when braking. The abrupt movement of the actuator 10 causes concurrent raise of the vehicle body 2 upwards and increase in the pressing force of the wheels 4 against the road. Upon complete stop of the vehicle the actuators 10 return to the initial position, i.e. the piston of the actuator 10 is in its fully retracted position.

It is clear that the invention is not limited to the above described embodiments, and the features indicated in the claims may be applied in any combination proper for a specific use of the solution.

## Claims

1. A brake assist system for a vehicle provided with a brake actuated by a brake pedal (1), the vehicle having a vehicle body (2) and a suspension system connected to the vehicle body (2), at least for the front axle, the suspension system comprising semi-axes (3) with wheels mounted thereon (4), steering knuckles (5) and shock absorbers (6), and the steering knuckles (5) couple the semi-axles (3) with the shock absorbers (6), the brake assist system comprising a position sensor (11) of the brake pedal (1), a velocity sensor (7), a suspension deflection sensor (8), a system controller (9), and an actuator (10), wherein the position sensor (11) of the brake pedal (1), the velocity sensor (7), the deflection sensor (8), and the actuator (10) are operatively connected to the controller (9), **characterized in that** the actuator is secured with its one end to the non-movable portion of the vehicle body (2) and has its other end free so that in the operational position the free end presses against a movable portion of the suspension system.

2. The system according to claim 1, **characterized in that** the velocity sensor (7) is positioned next to the wheel (4).

3. The system according to claim 1, **characterized in that** the deflection sensor (8) is positioned between the non-movable portion of the vehicle body (2) and a movable portion of the suspension of the vehicle front axle.

4. The system according to claim 3, **characterized in that** the deflection sensor (8) is secured between the floor panel of the vehicle and the steering knuckles (5).

5. The system according to claim 1, **characterized in that** the actuator (10) is a pneumatic actuator and it is provided with a control valve and the system additionally comprises a compressor (12).

6. The system according to claim 1, **characterized in that** the actuator (10) is a hydraulic actuator and it is provided with a control valve and the system additionally comprises a pump (12).

7. The system according to claim 1, **characterized in that** the actuator (10) is an electric actuator.

## Patentansprüche

1. Ein Bremsassistenzsystem für ein Fahrzeug, das mit einer über ein Bremspedal (1) betätigten Bremse ausgestattet ist, wobei das Fahrzeug eine Fahrzeugkarosserie (2) und ein mit der Fahrzeugkarosserie (2) verbundenes Federungssystem aufweist, zumindest für die Vorderachse, wobei das Federungssystem Halbwellen (3) mit daran angebrachten Rädern (4), Achsschenkel (5) und Stoßdämpfer (6) umfasst und die Achsschenkel (5) die Halbwellen (3) mit den Stoßdämpfern (6) verbinden, wobei das Bremsassistenzsystem einen Positionssensor (11) des Bremspedals (1), einen Geschwindigkeitssensor (7), einen Federwegsensor (8), eine Systemsteuerung (9) und einen Stellantrieb (10) umfasst, wobei der Positionssensor (11) des Bremspedals (1), der Geschwindigkeitssensor (7), der Federwegsensor (8) und der Stellantrieb (10) funktionsmäßig mit der Steuerung (9) verbunden sind, **dadurch gekennzeichnet, dass** der Stellantrieb mit seinem einem Ende am festen Teil der Fahrzeugkarosserie (2) befestigt ist und mit seinem zweiten Ende frei ist, so dass das freie Ende in der Betriebsstellung gegen einen beweglichen Teil des Federungssystems drückt.

2. Das System nach Anspruch 1, **dadurch gekennzeichnet, dass** der Geschwindigkeitssensor (7) neben dem Rad (4) angeordnet ist.

3. Das System nach Anspruch 1, **dadurch gekennzeichnet, dass** der Federwegsensor (8) zwischen dem festen Teil der Fahrzeugkarosserie (2) und dem beweglichen Teil der Federung der Vorderachse des Fahrzeugs angeordnet ist.

4. Das System nach Anspruch 3, **dadurch gekennzeichnet, dass** der Federwegsensor (8) zwischen dem Bodenblech des Fahrzeugs und den Achsschenkeln (5) befestigt ist.

5. Das System nach Anspruch 1, **dadurch gekennzeichnet, dass** der Stellantrieb (10) ein pneumatischer Stellantrieb ist und mit einem Steuerventil ausgestattet ist und das System zusätzlich einen Kompressor (12) umfasst.

6. Das System nach Anspruch 1, **dadurch gekennzeichnet, dass** der Stellantrieb (10) ein hydraulischer Stellantrieb ist und mit einem Steuerventil ausgestattet ist und das System zusätzlich eine Pumpe (12) umfasst.

7. Das System nach Anspruch 1, **dadurch gekennzeichnet, dass** der Stellantrieb (10) ein elektrischer Stellantrieb ist.

## Revendications

1. Système d'assistance au freinage pour un véhicule pourvu d'un frein actionné par une pédale de frein (1), le véhicule ayant une carrosserie (2) et un système de suspension relié à la carrosserie (2), au moins pour l'essieu avant, le système de suspension comprenant des demi-essieux (3) sur lesquels sont montées des roues (4), des porte-fusées (5) et des amortisseurs (6), et les porte-fusées (5) reliant les demi-essieux (3) aux amortisseurs (6), le système d'assistance au freinage comprenant un capteur de position (11) de la pédale de frein (1), un capteur de vitesse (7), un capteur de capteur de déflexion de la suspension (8), un dispositif de commande du système (9) et un actionneur (10), dans lequel le capteur de position (11) de la pédale de frein (1), le capteur de vitesse (7), capteur de déflexion (8) et l'actionneur (10) sont reliés fonctionnellement au dispositif de commande (9), **caractérisé en ce que** l'actionneur est fixé par l'une de ses extrémités à la partie non mobile de la carrosserie (2) et présente une autre extrémité libre, de sorte que, dans la position de fonctionnement, l'extrémité libre exerce une pression contre une partie mobile du système de suspension.

2. Système selon la revendication 1, **caractérisé en ce que** le capteur de vitesse (7) est positionné à proximité de la roue (4).

3. Système selon la revendication 1, **caractérisé en ce que** capteur de déflexion (8) est positionné entre la partie non mobile de la carrosserie (2) et une partie mobile de la suspension de l'essieu avant du véhicule.

4. Système selon la revendication 3, **caractérisé en ce que** capteur de déflexion (8) est fixé entre le panneau de plancher du véhicule et les porte-fusée (5).

5. Système selon la revendication 1, **caractérisé en ce que** l'actionneur (10) est un actionneur pneumatique et est pourvu d'une vanne de commande, et **en ce que** le système comprend en outre un compresseur (12).

6. Système selon la revendication 1, **caractérisé en ce que** l'actionneur (10) est un actionneur hydraulique et est pourvu d'une vanne de commande, et **en ce que** le système comprend en outre une pompe (12).

7. Système selon la revendication 1, **caractérisé en ce que** l'actionneur (10) est un actionneur électrique.
